# EUROPÄISCHE PATENTSCHRIFT

(11) **EP 0 425 918 B1**
(45) Veröffentlichungstag und Bekanntmachung des Hinweises auf die Patenterteilung: **29.12.1993**
(21) Anmeldenummer: 90120035.2
(22) Anmeldetag: 19.10.1990
(51) Int. Cl.: B60N 2/42, B60N 2/02, G05G 5/12, G05G 1/04

(54) **Betätigungshebel für einen Fahrzeugsitz**
Actuator lever for a vehicle seat
Levier de commande pour un siège de véhicule

(30) Priorität: 02.11.1989 DE 3936375
(43) Veröffentlichungstag der Anmeldung: 08.05.1991
(73) Patentinhaber: AUDI AG, 85045 Ingolstadt (DE)
(72) Erfinder: Götz, Herwig, W-8071 Lenting (DE)
(74) Vertreter: Engelhardt, Harald

(56) Entgegenhaltungen:
- DE-C- 3 001 164
- GB-A- 2 103 077
- US-A- 2 206 531
- PATENT ABSTRACTS OF JAPAN vol. 14, no. 81 (M-93)15.Februar 1990 &JP-A-1 295 921 ( TOYOTA ) 29. November 1989

## Beschreibung

Die Erfindung bezieht sich auf einen Betätigungshebel für einen Fahrzeugsitz gemäß dem Oberbegriff des Patentanspruches 1.

Fast alle Fahrzeugsitze, sofern sie nicht elektrisch einstellbar sind, sind mit einem oder mehreren Betätigungshebeln versehen, durch welche der Fahrzeugsitz entriegelbar ist und dadurch in der Längsrichtung oder in der Höhe eingestellt werden kann. Derartige Betätigungshebel sind um eine Drehachse schwenkbar und an einer Feder angelenkt, welche versucht, den Betätigungshebel in seine den Fahrzeugsitz verriegelnde Stellung zu ziehen.

Bei einer aus der GB-A-2103077 bekannten Lösung werden auch im Zusammenhang mit einer Höhenverstellung für einen Fahrzeugsitz Zugfedern eingesetzt, um die Arretierung der Höhenverstellung zu sichern und den Betätigungshebel für die Höhenverstellung zu fixieren.

Aus der DE-OS 24 42 044 ist ein Kindersitz für Kraftfahrzeuge bekannt, wobei zwischen dem Fahrzeug und dem Sitz Dämpfungsmittel angeordnet sind, die im Falle einer plötzlichen Geschwindigkeits- oder Richtungsänderung als Energiewandler wirken.

Zur Beseitigung von Vibrationen an einem Fahrersitz eines Kraftfahrzeuges ist es aus der DE-OS 31 42 553 bekannt, zwischen einem Tragrahmen und einer den Fahrersitz tragenden Wiege Dämpfungsglieder anzuordnen.

In der DE-OS 23 07 366 ist ein Sicherheitssitz für Fahrzeuge beschrieben, mit einem Personen-Rückhalte-Gurtsystem und einem Sitz sowie einem Lehnenteil, wobei am Sitz eine Einrichtung zur Energieabsorption angeordnet ist. Die Energieabsorption wird dadurch erreicht, daß sowohl das Lehnenteil als auch das Sitzteil gegenüber dem Aufbau des Fahrzeuges bei einer starken Verzögerung Relativbewegungen ausführen können und zwischen den beiden Bauteilen und dem Fahrzeug Energiewandler angeordnet sind.

Die DE-OS 24 15 769 zeigt eine stufenlose Verstellvorrichtung für einen Fahrzeugsitz, welche gleichzeitig als Sicherheitselement zur definiert energieverzehrenden Aufnahme von bei einem Fahrzeugunfall auftretenden, auf den Fahrzeugsitz wirkenden Kräften herangezogen werden kann. Dazu werden zwischen der Sitzlehne und dem Sitzteil bzw. zwischen dem Sitzteil und der Bodengruppe geeignete Stoßdämpfer mit einem Kolben und einem Zylinder eingesetzt.

Aus der DE-OS 37 11 846 ist eine Fahrzeugsitz-Lehnenverstellung bekannt, die bei leichter Verstellbarkeit eine sichere Abstützung bei den üblichen dynamischen sowie statischen Kräften infolge Beanspruchung durch Fahren oder Ausruhen gewährleistet und bei einem Unfall genügendes Arbeitsaufnahmevermögen innerhalb der Lehnenverstellung besitzt, ohne daß dabei die konstruktiven Bauteile beschädigt werden. Um eine zu starke Beanspruchung der Person oder der Sitzkonstruktion im Falle eines Auffahrunfalles zu vermeiden, kann bei dieser bekannten Konstruktion ein die Kräfte begrenzender Stoßdämpfer eingebaut werden.

Eine aus der DE-OS 22 52 999 bekannte Vorrichtung zur Höhenverstellung von Kraftfahrzeugsitzen weist mehrere schwenkbar am Fahrzeugboden angelenkte Hebel auf. Die Schwenkbewegung der Hebel wird durch ein Verstellorgan ausgelöst, welches beim Überschreiten einer vorgegebenen Belastung ihre wirksame Länge unter Energieabsorption verändern kann.

Ein in der EP-OS 0 316 789 allgemein beschriebenes verstellbares Kraftübertragungselement, insbesondere für Sitze von Personenkraftwagen, ist so ausgebildet, daß bei schnellen positiven oder negativen Beschleunigungen eine schnelle und wirksame Blockierung der verschieblichen Massen erreicht wird. Das insbesondere für Fahrzeugsitze geeignete Kraftübertragungselement soll die Massen bei vorzugsweise negativen Beschleunigungen in ihrer jeweiligen Position unverzüglich und direkt arretieren.

Das DE-GM 85 05 587 zeigt eine Stellvorrichtung für Kraftfahrzeugsitze, insbesondere zur Neigungsverstellung der Rückenlehnen. Zur Eliminierung des Spiels zwischen den Bauteilen des die Rückenlehne mit dem Sitzteil verbindenden Gelenkbeschlages ist ein Federelement vorgesehen, welches auch hydraulisch oder pneumatisch wirken kann.

Schließlich ist aus der DE-PS 30 01 164 eine Vorrichtung zum Verstellen einer Sitzlehne bekannt, umfassend einen Gelenkbeschlag mit einem dem Sitzkissen zugeordneten festen Gelenkteil und einem der Sitzlehne zugeordneten schwenkbaren Gelenkteil. Mit einem Gelenkteil ist ein Verdrängungskörper verbunden, welcher in einer mit Flüssigkeit oder einem halbfesten Stoff gefüllten Kammer beim Verstellen der Sitzlehne bewegbar ist. Diese Ausgestaltung stellt sicher, daß die Lehnenverstellung von Hand ungehindert bewegt werden kann, bei plötzlich auftretenden Kraftspitzen (Aufprall) jedoch eine Blockierung eintritt.

Der Erfindung liegt hingegen die Aufgabe zugrunde, einen Betätigungshebel für einen Fahrzeugsitz so auszugestalten, daß dieser auch bei hohen Beschleunigungen in seiner die Verriegelung sichernden Stellung verbleibt.

Die Aufgabe wird durch die kennzeichnenden Merkmale des Patentanspruches 1 gelöst. Dadurch, daß zwischen dem Betätigungshebel und einem Teil des Fahrzeugsitzes ein Dämpfungsglied angeordnet ist, kann selbst bei großen Beschleunigungen, wie sie bei einem Aufprall auftreten, über den Betätigungshebel keine selbständige Entriegelung des ihm zugeordnetem Sitzteiles erfolgen. Eine solche selbsttätige Entriegelung ist bei bekannten Betätigungshebeln denkbar, wenn der Betätigungshebel so gelagert ist, daß bei Beschleunigungen ein lösendes Drehmoment auftritt. Der Hebel dieses Drehmoments ist dabei durch den Abstand des Massenschwerpunkts von der Drehachse des Betätigungshebels gegeben.

Um dem selbsttätigen verschwenken des Betätigungshebels entgegenzuwirken, ist bei den bekannten Anordnungen eine Feder vorgesehen, welche den Betätigungshebel in seine Verriegelungsstellung zieht bzw. drückt.

Hat der Betätigungshebel jedoch ein relativ hohes Gewicht und muß die Drehachse aufgrund baulicher Gegebenheiten in einem relativ großen Abstand zum Massenschwerpunkt gewählt werden, dann reicht die Federkraft bei weitem nicht aus, um den Betätigungshebel zurückzuhalten. Um die unerwünschte Schwenkbewegung eines derartig gelagerten Betätigungshebels bei einem Aufprall auszuschließen, wäre eine Feder notwendig, die so stark ist, daß der Betätigungshebel von Hand nur unter großer Kraftanstrengung betätigt werden könnte.

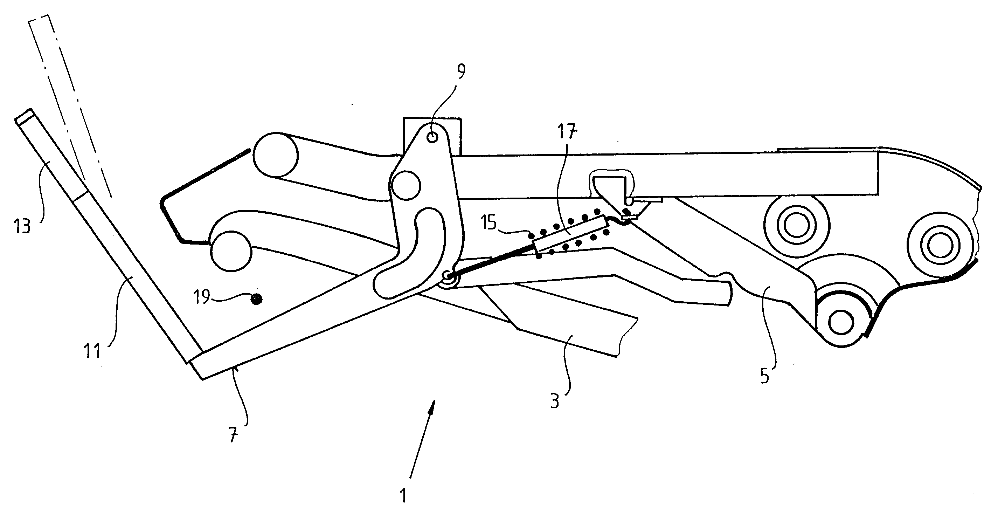

Das vorgeschlagene, zwischen dem Betätigungshebel und einem Teil des Fahrzeugsitzes angeordnete Dämpfungsglied ist so ausgestaltet, daß es einerseits das Entriegeln von Hand nicht beeinträchtigt und andererseits bei kollisionsbedingten Beschleunigungen das Betätigungsglied blockiert. Ein solches Verhalten läßt sich in einfacher Weise durch an sich bekannte Dämpfungselemente, bestehend aus einer Kolben-Zylinder-Einheit erreichen. Durch eine Abstimmung der Öffnungen in dem Kolben kann die Flüssigkeit im Zylinder während der Bewegung von Hand ohne großen Widerstand hindurchgedrückt werden. Bei einer schlagartigen Bewegung des Kolbens, wie sie bei einer aufprallbedingten Bescheunigung des Betätigungshebels auf den Kolben übertragen wird, tritt eine Blockierung des Kolbens im Zylinder auf. Durch dieses Blockieren wird auch der mit dem Kolben bzw. dem Zylinder in Verbindung stehende Betätigungshebel zuverlässig zurückgehalten und dadurch die Verriegelungsposition gesichert. Zum Halten und zum Zurückführen des Betätigungshebels während des normalen Betriebs wird bei der vorgeschlagenen Anordnung ebenfalls eine Feder verwendet. Besonders vorteilhaft ist, wenn diese Feder und das Dämpfungsglied in einer Richtung wirken und zu einer Baueinheit zusammengefaßt sind, bei der das Dämpfungsglied in der Feder angeordnet ist. Da die Feder ohnehin einen zylinderförmigen Raum umschließt, kann in diesem Raum das Dämpfungselement, beispielsweise eine Kolben-Zylinder-Einheit angeordnet sein. Damit wird für das Dämpfungsglied kein zusätzlicher Bauraum beansprucht. Ein Ausführungsbeispiel der Erfindung ist in der Zeichnung dargestellt und wird nachfolgend näher beschrieben.

Die Zeichnung zeigt in Seitenansicht das Gestell 1 eines höhenverstellbaren Fahrzeugsitzes. Die Höhenverstellung wird dadurch erreicht, daß ein vorderer Hebel 3 und ein hinterer Hebel 5 ein Viergelenk bildend verschwenkbar sind. Die gewählte Höhenverstellung wird durch ein geeignetes Rastelement (nicht dargestellt) gesichert. Zum Entriegeln des Rastelementes ist ein Betätigungshebel 7 vorgesehen. Der Betätigungshebel 7 weist eine winkelförmige Gestalt auf und ist an einer Drehachse 9 am Gestell 1 gelagert. Der vordere Abschnitt 11 des Betätigungshebels 7 ragt vor dem Gestell 1 schräg nach oben, so daß er von der Bedienungsperson leicht gefaßt werden kann. Um ein leichtes Greifen des Betätigungshebels 7 zu ermöglichen, ist das Ende des Abschnittes 11 ringförmig zu einem Griff 13 ausgestaltet.

Um eine Höhenverstellung vorzunehmen, muß der Betätigungshebel 7 über den Griff 13 von der in der Zeichnung dargestellten Position nach oben in die strichpunktiert dargestellte Stellung gezogen werden. Bei diesem Verschwenken um die Drehachse 9 muß die Kraft einer Feder 15 überwunden werden, welche zusammen mit einem Dämpfungsglied 17 am Betätigungshebel 7 und am Gestell 11 befestigt sind. Wird der Betätigungshebel 7 losgelassen, dann kehrt er durch die Kraft der Feder 15 selbsttätig in seine die Höhenverstellung verriegelnde Position zurück.

Das Dämpfungsglied 17 ist in an sich bekannter Weise als Kolben-Zylinder-Einheit ausgeführt (nicht dargestellt). Der Aufbau des Dämpfungsgliedes 17 ist so gewählt, daß beim verschwenken des Betätigungshebels 7 von Hand diese Bewegung nicht spürbar beeinträchtigt wird. Wenn jedoch der Betätigungshebel 7 plötzlich sehr stark nach vorne (in der Zeichnung nach links) beschleunigt wird, wie dies bei einem Aufprall auftritt, dann blockiert der mit dem Betätigungshebel 7 direkt oder über den Zylinder indirekt verbundene Kolben im Dämpfungsglied 17. Damit wird der Betätigungshebel 7 zuverlässig in seiner die Verriegelung sichernden Stellung gehalten.

Die Beschleunigung des Betätigungshebels 7 bei einem Aufprall wird dadurch hervorgerufen, daß der Massenschwerpunkt, welcher etwa an der mit 19 bezeichneten Stelle liegt, zur Drehachse 9 so beabstandet ist, daß bei einer Beschleunigung des Betätigungshebels 7 nach vorne ein den Betätigungshebel 7 in seine die Verriegelung freigebende Stellung drehendes Moment erzeugt wird.

## Patentansprüche

1. Betätigungshebel für einen Fahrzeugsitz, welcher zum Entriegeln eines ihm zugeordneten verstellbaren Sitzteiles gegen die Kraft einer Feder (15) um eine Drehachse verschwenkbar ist, **dadurch gekennzeichnet,** daß zwischen dem Betätigungshebel (7) und einem Teil des Fahrzeugsitzes ein Dämpfungsglied (17) wirkungsmäßig parallel zur Feder angeordnet ist, dessen Dämpfungsverhalten so abgestimmt wird, daß es einerseits das Langsame Entriegeln von Hand nicht beeinträchtigt und andererseits bei kollisionsbedingten Beschleunigungen den Betätigungshebel (7) blockiert.

2. Betätigungshebel nach Anspruch 1, **dadurch gekennzeichnet,** daß die Feder (15) und das Dämpfungsglied (17) in der gleichen Richtung wirken und zu einer Baueinheit zusammengefaßt sind, bei der das Dämpfungsglied (17) in der Feder (15) angeordnet ist.

## Claims

1. Actuating lever for a vehicle seat, which is pivotable about an axis of rotation counter to the force of a spring (15) in order to release an adjustable seat part assigned to it, characterised in that there is arranged between the actuating lever (7) and part of the vehicle seat and operatively parallel to the spring a damping member (17), the damping behaviour of which is coordinated in such a way that, on the one hand, it does not impair slow release by hand and, on the other hand, it blocks the actuating lever (7) in the event of accelerations caused by a collision.

2. Actuating lever according to Claim 1, characterised in that the spring (15) and the damping member (17) act in the same direction and are combined to form a constructional unit, in which the damping member (17) is arranged in the spring (15).

## Revendications

1. Levier de manoeuvre pour un siège de véhicule, pouvant pivoter autour d'un axe de rotation, contre la force antagoniste d'un ressort (15), pour le déverrouillage d'une partie réglable du siège qui lui est associée, caractérisé en ce qu'un élément amortisseur (17) est monté, de manière à agir parallèlement au ressort, entre le levier de manoeuvre (7) et une partie du siège de voiture, élément dont les caractéristiques d'amortissement sont réglées de telle sorte que, d'une part, il n'entrave pas le déverrouillage lent à la main et que, d'autre part, il bloque le levier de manoeuvre (7) en cas d'accélérations dues à une collision.

2. Levier de manoeuvre selon la revendication 1, caractérisé en ce que le ressort (15) et l'élément amortisseur (17) agissent dans la même direction et sont réunis en un ensemble de construction dans lequel l'élément amortisseur (17) est disposé dans le ressort (15).
